# EUROPÄISCHE PATENTSCHRIFT

(11) **EP 2 752 729 B1**
(45) Veröffentlichungstag und Bekanntmachung des Hinweises auf die Patenterteilung: **20.05.2015**
(21) Anmeldenummer: 13150377.3
(22) Anmeldetag: 07.01.2013
(51) Int. Cl.: G06F 1/18

(54) **Revisionssystem zur Revision einer technischen Anlage**
Inspection system for inspecting a technical installation
Système de révision destiné à la révision d'une installation technique

(43) Veröffentlichungstag der Anmeldung: 09.07.2014
(73) Patentinhaber: Siemens Aktiengesellschaft, 80333 München (DE)
(72) Erfinder: Lück, Robin, 15366 Hoppegarten (DE); Baumgart, Frank, 12439 Berlin (DE); Kirchhübel, Uwe, 02959 Schleife (DE); Woitscheck, Rolf-Dieter, 14089 Berlin (DE); Bergles, Hans, 10627 Berlin (DE); Tillack, Lothar, 15370 Petershagen (DE)

(56) Entgegenhaltungen:
- JP-A- H10 293 625
- US-A- 6 157 958
- US-A1- 2006 187 633
- US-B1- 6 442 019

## Beschreibung

Die Erfindung betrifft ein Revisionssystem zur Revision einer technischen Anlage. Insbesondere betrifft die Erfindung ein Revisionssystem zur Revision einer Turbine wie zum Beispiel einer Gasturbine.

Bei der Revision bzw. dem Service technischer Anlagen, etwa von Gas- oder Dampfturbinen in Kraftwerken, werden vordefinierte Arbeits- oder Prüfschritte nach festem Schema durchgeführt. Die dabei entstehenden und bspw. einer Turbine zugeordneten Datenmengen, wie Teilelisten, Abnahmeprotokolle, Softwareversionen und -protokolle, Betriebsdaten usw. sind immer schwieriger zu verwalten. Dies ist insbesondere der Fall, da bei dieser umfassenden Betrachtung einer Turbine fast jede Turbine ein Einzelmodell ist.

Aufgabe der Erfindung ist es daher, ein vorteilhaftes Revisionssystem zur Revision einer technischen Anlage, insbesondere einer Gas- oder Dampfturbine, zur Verfügung zu stellen.

Diese Aufgabe wird durch ein Revisionssystem nach Anspruch 1 gelöst. Vorteilhafte Weiterbildungen der Erfindung sind in den abhängigen Ansprüchen definiert.

Ein erfindungsgemäßes Revisionssystem zur Revision einer technischen Anlage umfasst einen Schrank, welcher mindestens eine Schublade mit einer in der Schublade angeordneten Datenschnittstelle aufweist, mindestens ein in die Schublade passendes Handheld-Terminal mit einer zur Datenschnittstelle in der Schublade kompatiblen Datenschnittstelle, einen mit der Datenschnittstelle jeder Schublade verbundenen Rechner, eine mit dem Rechner verbundenen Datenträgerleseeinrichtung, und wenigstens einen mit der Datenträgerleseeinrichtung kompatiblen Datenträger, welcher eine für die Revision individualisierte Software und einen Installer zum Installieren der individualisierten Software auf dem Rechner und wenigstens einem in einer Schublade befindlichen und über seine Datenschnittstelle mit der Datenschnittstelle in der Schublade verbundenen Handheld-Terminal enthält. Die individualisierte Software umfasst eine individualisierte Rechner-Revisionssoftware zur Installation auf dem Rechner und eine individualisierte Terminal-Revisionssoftware zur Installation auf jedem in einer Schublade befindlichen und über seine Datenschnittstelle mit der Datenschnittstelle in der Schublade verbundenen Handheld-Terminal.

Das erfindungsgemäße Revisionssystem ist autark einsetzbar und benötigt lediglich eine Stromversorgung, wodurch es nur ein Minimum an Infrastruktur am Ort der durchzuführenden Revision benötigt. Zudem ist das Revisionssystem sehr flexibel, da der Rechner noch keinerlei auf bestimmte Belange abgestimmte Spezialisierungen enthält, sondern vorzugsweise lediglich ein Betriebssystem. Aber selbst auf dieses kann verzichtet werden, so dass auf dem Rechner lediglich ein grundlegendes Eingabe/Ausgabe System (BIOS, Basic Input Output System) vorhanden sein muss. Die Spezialisierung des Rechners erfolgt dann revisionsspezifisch mittels des Datenträgers. Sofern auf dem Rechner lediglich ein BIOS vorhanden ist, kann sich auch das Betriebssystem zur Installation auf dem Rechner auf dem Datenträger befinden. Da die Revisionssoftware für die jeweilige Revision mittels des Datenträgers sowohl auf dem Rechner als auch auf den in den Schubladen befindlichen Handheld-Terminals installiert wird, kann auch zuverlässig sichergestellt werden, dass bei der Revision auf dem Rechner und den Handheld-Terminals jeweils die aktuelle und zueinander kompatible individualisierte Revisionssoftware vorhanden ist.

In einer Weiterbildung der Erfindung umfasst die individualisierte Software zur Installation auf dem Rechner und jedem in einer Schublade befindlichen und über seine Datenschnittstelle mit der Datenschnittstelle in der Schublade verbundenen Handheld-Terminal eine Aktualisierungssoftware zum Aktualisieren der auf dem Rechner installierten Rechner-Revisionssoftware auf der Basis der auf einem Handheld-Terminal installierten Terminal-Revisionssoftware, wenn die Datenschnittstelle des Handheld-Terminals mit der Datenschnittstelle in einer Schublade verbunden wird. Dabei kann die Rechner-Revisionssoftware eine Rechner-Datenbank und die Terminal-Revisionssoftware eine Terminal-Datenbank umfassen. Die Aktualisierungssoftware umfasst dann zumindest eine Datenbank-Aktualisierungssoftware zum Aktualisieren der auf dem Rechner installierten Rechner-Datenbank auf der Basis der auf einem Handheld-Terminal installierten Terminal-Datenbank, wenn die Datenschnittstelle eines Handheld-Terminals mit der Datenschnittstelle in einer Schublade verbunden wird. Auf diese Weise wird die Aktualisierung der Rechner Revisionssoftware bzw. insbesondere der Rechner-Datenbank von einer Nutzerinitiative unabhängig.

In einer speziellen Ausgestaltung des erfindungsgemäßen Revisionssystems ist jeder Schublade ein softwaregesteuerter Öffnungsmechanismus zugeordnet. Die Steuersoftware zum Ansteuern des Öffnungsmechanismus der wenigstens einen Schublade ist dann ebenfalls auf dem Datenträger zur Installation auf dem Rechner vorhanden. Dadurch können die Schubladen erst nach Installation der Revisionssoftware geöffnet werden, da die Steuersoftware zum Ansteuern des Öffnungsmechanismus ebenfalls erst mittels des Datenträgers installiert wird. Auf diese Weise kann verhindert werden, dass ein in einer Schublade des Revisionssystems befindliches Handheld-Terminal aus der Schublade genommen wird, bevor die Terminal-Revisionssoftware darauf installiert ist.

Die individualisierte Software kann außerdem mit einem Modul zur Zugriffbeschränkung versehen sein, bspw. durch Passwortschutz oder Kopplung der Freigabe an eine Nutzerkennung. Hierzu kann das Revisionssystem bspw. für jeden Nutzer eine Identifikationskennelement, etwa eine ID-Karte, ein RFID-Tag, etc., sowie eine mit dem Rechner verbundenes Lesergerät zum Auslesen der Identifikationskennelemente umfassen. Bei einem softwaregesteuerten Öffnungsmechanismus besteht dann bspw. die Möglichkeit, die Öffnung der Schublade an ein Passwort oder eine Nutzerkennung zu koppeln, so dass die Handheldterminals nicht ohne weiteres zugänglich sind. Außerdem kann auch die Nutzung der Rechner-Revisionssoftware oder der Terminal-Revisionssoftware (oder beider) an ein Passwort oder eine Nutzerkennung gekoppelt werden. Außerdem besteht die Möglichkeit, dass die individualisierte Software wenigstens zwei Hierarchieebenen umfasst und jedes Identifikationskennelement einer Hierarchieebene in der individualisierten Software zugeordnet ist. Auf diese Weise können bspw. auf den Handheld-Terminals Versionen der Terminal-Revisionssoftware installiert werden, die Teile enthält, welche nur dem jeweiligen autorisierten Nutzer zugänglich gemacht werden.

In einer Weiterbildung des erfindungsgemäßen Revisionssystems enthält jede Schublade eine Ladeschnittstelle und jedes Handheld-Terminal eine zur Ladeschnittstelle der Schubladen kompatible Ladeschnittstelle, so dass die Handheld-Terminals automatisch geladen werden können, sobald sie sich in einer Schublade befinden. Wenn zudem wenigstens zwei Schubladen und zwei Handheld-Terminals vorhanden sind, kann die Steuersoftware zum Ansteuern des Öffnungsmechanismus dazu ausgelegt sein, den Ladezustand der an die Ladeschnittstellen in den Schubladen angeschlossenen Handheld-Terminals zu überprüfen und, wenn ein Öffnen einer Schublade veranlasst ist, diejenige Schublade zu öffnen, in der sich dasjenige Handheld-Terminal mit dem höheren Ladung befindet.

Im erfindungsgemäßen Revisionssystem kann die individualisierte Software eine Verriegelungssoftware umfassen, mit der die vorhandenen Datenträgerleseeinrichtungen verriegelt werden können. Zudem kann jeder zum Revisionssystem gehörende Datenträger eine im Rechner hinterlegte Signatur aufweisen, wobei die vorhandenen Datenträgerleseeinrichtungen dann so konfiguriert sind, dass sie nur Datenträger mit einer hinterlegten Signatur erkennen.

Gemäß einem weiteren Aspekt der Erfindung wird ein erfindungsgemäßes Revisionssystem zur Verfügung gestellt, in dem wenigstens Teile der für den Rechner vorgesehenen individualisierten Software auf dem Rechner und/oder wenigstens Teile der für die Handheld-Terminals vorgesehenen individualisierten Software einem Handheld-Terminal installiert ist bzw. sind.

Weiter Merkmale, Eigenschaften und Vorteile der Erfindung ergeben sich aus der nachfolgenden Beschreibung eines Ausführungsbeispiels unter Bezugnahme auf die beiliegenden Figuren.

Figur 1 zeigt die externen Komponenten einer Vorrichtung zur Revision einer Turbine gemäß der Erfindung.

Figur 2 zeigt die internen Komponenten einer Vorrichtung zur Revision einer Turbine gemäß der Erfindung.

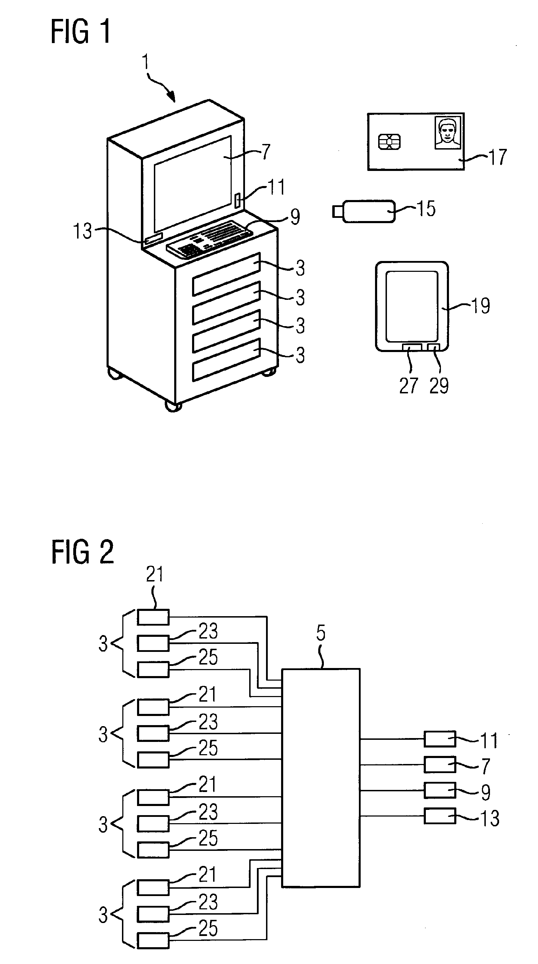

Ein Ausführungsbeispiel für ein erfindungsgemäßes Revisionssystem wird nachfolgend mit Bezug auf die Figuren 1 und 2 erläutert. Während Fig. 1 die äußeren Merkmale des Revisionssystems zeigt, zeigt Fig. 2 die inneren Merkmale des Systems.

Das Revisionssystem umfasst einen Schrank 1 mit einer Anzahl von Schubladen 3, einem Rechner 5 und einer Mehrzahl mit dem Rechner 5 verbundenen Peripherieeinheiten. Im vorliegenden Ausführungsbeispiel ist der Schrank als Sicherheitsschrank ausgebildet. Als Peripherieeinheiten des Revisionssystems sind vorhanden: Ein Monitor 7, eine Tastatur 9, wenigstens ein USB-Anschluss 11 sowie ein Kartenlesegerät 13. Weiterhin umfasst das System wenigstens einen USB-Stick 15 als Datenträger, eine Anzahl Identifikationskarten 17 sowie wenigstens ein Tablet 19 als Handheldterminal. Typischerweise sind so viele Tablets 19 vorhanden, wie der Schrank 1 Schubladen 3 aufweist.

Die interne Struktur des Revisionssystems ist in Fig. 2 dargestellt. In dieser Figur sind der Rechner 5 sowie die mit diesem Rechner verbundenen Peripheriegeräte und Schnittstellen dargestellt. Die Peripheriegeräte und Schnittstellen sind dabei ebenso wie der Rechner 5 lediglich als schematische Blöcke dargestellt, die mit dem Rechner 5 verbunden sind. Neben den bereits erwähnten Peripheriegeräten und Schnittstellen Monitor 7, Tastatur 9, USB-Anschluss 11 und Kartenlesegerät 13 sind in jeder Schublade 3 außerdem drei weitere Peripheriegeräte bzw. Schnittstellen vorhanden. Jede Schublade 3 weist eine Datenschnittstelle 21, eine Ladeschnittstelle 23 sowie einen computergesteuerten Öffnungsmechanismus 25 auf. All die genannten Peripheriegeräte bzw. Schnittstellen werden vom Rechner 5 softwarebasiert gesteuert.

Jedes Tablet 19 weist eine mit der Datenschnittstelle 21 der Schubladen kompatible Datenschnittstelle 27 und eine mit der Ladeschnittstelle 23 der Schubladen 3 kompatible Ladeschnittstellen 29 auf. Ein in einer Schublade 3 befindliches Tablet kann daher über die Datenschnittstellen 21, 27 mit dem Rechner 5 Daten austauschen. Außerdem kann ein in der Schublade befindliches Tablet über die Ladeschnittstellen 23, 29 geladen werden.

Auf dem Computer 5 ist im vorliegenden Ausführungsbeispiel lediglich ein Betriebssystem vorinstalliert. Die für die Revision verwendete und für die spezielle Revision individualisierte Software ist dagegen noch nicht installiert. Diese befindet sich auf dem USB-Stick 15 und muss nach dem erstmaligen Hochfahren des Rechners 5 auf diesem installiert werden. Die individualisierte Software enthält sowohl eine Rechner-Revisionssoftware, welche die zur Installation auf dem Rechner vorgesehenen Komponenten enthält als auch eine Handheld-Revisionssoftware, welche die auf dem Handheldterminals, d.h. auf den Tablets 19, zu installierenden Komponenten der individualisierten Revisionssoftware enthält. Zudem enthält der USB-Stick 15 eine Installationssoftware, kurz Installer genannt, mit dem sich die einzelnen Komponenten der individualisierten Revisionssoftware auf den Rechner 5 und die in den Schubladen 3 befindlichen und jeweils über die Datenschnittstelle 21, 27 mit dem Rechner 5 verbundenen Tablets 19 installieren lässt. Sowohl die Rechner-Revisionssoftware als auch die Terminal-Revisionssoftware umfassen jeweils eine Datenbank, im Folgenden Rechner-Datenbank bzw. Terminal-Datenbank genannt.

Die individualisierte Revisionssoftware umfasst darüber hinaus eine Aktualisierungssoftware zum Aktualisieren der auf dem Rechner installierten Rechner-Revisionssoftware auf der Basis der auf einem Tablet 19 beim Einlegen in die Schublade installierten Terminal-Revisionssoftware, wenn die Datenschnittstelle 27 des Tablets 19 mit der Datenschnittstelle 21 einer Schublade 3 verbunden ist. Typischerweise sind die Schubladen 3 derart ausgestaltet, dass ein Tablet 19 beim Einlegen in die Schublade automatisch mit der Datenschnittstelle 21 der Schublade und vorzugsweise auch mit der Ladeschnittstelle 23 der entsprechenden Schublade verbunden wird. Mit Hilfe der Aktualisierungssoftware kann dann eine automatische Aktualisierung der Rechner-Revisionssoftware auf der Basis der Terminal-Revisionssoftware erfolgen. Wenn das Tablet 19 nach einem Gebrauch wieder in die Schublade 3 gelegt wird, kann so sichergestellt werden, dass die Rechner-Revisionssoftware alle während des Gebrauchs des Tablets durchgeführten Revisionsschritte enthält und zentral protokollieren kann. Das Aktualisieren umfasst dabei insbesondere das Aktualisieren der Rechner-Datenbank auf der Basis der Terminal-Datenbank.

Auf dem Stick befindet sich zudem eine Steuersoftware zum Ansteuern der Öffnungsmechanismen 25 der Schubladen 3. Diese Steuerungssoftware wir auf dem Rechner 5 installiert und ermöglicht das Öffnen und Schließen der Schubladen 3.

Als weitere Komponente der individualisierten Revisionssoftware findet sich auf dem USB-Stick ein Softwaremodul zur Zugriffsbeschränkung. Dieses wird auf dem Rechner 5 installiert und sorgt dafür, dass bestimmte Teile der Revisionssoftware und/oder der Datenbanken nur gemäß Nutzerkennung freigegeben werden. Sowohl die Rechner-Revisionssoftware als auch die Tablet-Revisionssoftware weisen vorzugsweise mehrere Hierarchieebenen auf, wobei der Zugriff auf Teile der Revisionssoftware bzw. der Revisions-Datenbank je nach Hierarchieebene des Nutzers freigegeben oder blockiert sind. Um die Nutzer den einzelnen Hierarchieebenen zuordnen zu können, enthält jeder Nutzer eine Nutzerkennung, wobei jede Nutzerkennung einer der Hierarchieebenen zugeordnet ist. Die Nutzerkennung ist auf der Identifikationskarte 17 hinterlegt und wird beim Einlesen der Identifikationskarte 17 im Lesegerät 13 automatisch abgefragt. Auf der Basis der erfassten Nutzerkennung wird dann der jeweilige Nutzer vom Rechner der entsprechenden Hierarchieebene zugeordnet. Auf diese Weise kann beispielsweise dem Revisionsleiter der volle Zugriff auf alle Softwarebereiche der Revisionssoftware ermöglicht werden, während für spezielle Aufgaben vorgesehenen Revisionskräften lediglich diejenigen Bereiche der Revisionssoftware zugänglich gemacht werden, die sie für ihre Arbeit benötigen. Zum Beispiel können fünf Hierarchieebenen vorhanden sein, wobei die Ebene fünf die höchste sein kann, die zum Beispiel dem Revisionsleiter zugeordnet ist. Einzelne Arbeitsschritte sind lediglich ab einer bestimmten Hierarchieebene anwählbar und ausführbar.

Mit Hilfe des Revisionssystems kann eine Revision wie folgt durchgeführt werden:

Zu Beginn der Revision wird der Schrank 1 mit in den Schubladen 3 befindlichen Tablet 19 an den Ort der durchzuführenden Revision verfrachtet. Jeder dort tätige Revisionsmitarbeiter enthält eine Identifikationskarte 17, mit der er sich am Revisionssystem ausweisen kann. Nachdem das Revisionssystem am Ort der Revision angekommen ist, ist der erste vorzunehmende Schritt das Laden der individualisierten Revisionssoftware. Dazu verbindet bspw. der Revisionsleiter den USB-Stick 15 mit dem dafür vorgesehenen Anschluss 11 des Revisionssystems und installiert die auf dem Stick befindliche Software. Um sicherzustellen, dass nur der Revisionsleiter die Software installieren kann, ist der Installer im vorliegenden Ausführungsbeispiel mit einem Passwort geschützt. Nur mit dem richtigen Passwort kann somit die individualisierte Revisionssoftware auf den Rechner 5 und die Tablets 19 installiert werden.

Nachdem alle Softwarekomponenten der individualisierten Revisionssoftware installiert worden sind, kann mit dem eigentlichen Revisionsbetrieb begonnen werden. Jeder Revisionsmitarbeiter kann sich ein Tablet 19 aus einer Schublade nehmen und mit Hilfe der auf dem Tablet 19 installierten Terminal-Revisionssoftware seine Arbeitsschritte abarbeiten. Da das Öffnen der Schublade 3 nur softwaregesteuert möglich ist, muss hierzu ein entsprechender Steuerungsbefehl vom Rechner an den Öffnungsmechanismus 25 der Schublade 3 gesandt werden. Dies kann bspw. automatisiert erfolgen, sobald der Mitarbeiter seine Identifikationskarte 17 in das dafür vorgesehene Lesegerät 13 eingeführt hat. In einer alternativen Ausgestaltung kann es auch vorgesehen sein, dass das Öffnen der Schublade nach dem Einführen der Identifikationskarte 17 über die Tastatur 9 manuell ausgelöst werden muss. Anhand der Identifikationskarte 17 stellt der Rechner 5 auch die Hierarchieebene fest, die dem Mitarbeiter zugeordnet ist und stellt die entsprechenden Freigaben auf der Terminal-Revisionssoftware ein. Die Auswahl der Schublade 3, die geöffnet wird, und damit die Auswahl des auszugebenden Tablets 19 kann hierbei vom Rechner 5 anhand des Ladezustandes des jeweiligen Tablets 19 erfolgen. Auf diese Weise kann sichergestellt werden, dass immer dasjenige Tablet 19 herausgegeben wird, welches den aktuell höchsten Ladezustand aufweist.

Die Terminal-Revisionssoftware enthält insbesondere einen individualisierten Revisionsplan. Der individuelle Revisionsplan 2 enthält einzelne Arbeitsschritte, die zum Beispiel chronologisch sortiert sein können, das heißt in welcher Reihenfolge die Arbeitsschritte zu bearbeiten sind.

Jedem Arbeitsschritt ist eine kurze Beschreibung zugeordnet sowie Verweise auf damit zusammenhängende Arbeitsschritte oder benötigte Teile. Falls Protokolle zum Abarbeiten und/oder Dokumentieren für einen Arbeitsschritt vorhanden sind, sind diese ebenfalls kenntlich gemacht.

Der Status des Arbeitsschritts wie zum Beispiel offen, abgeschlossen oder in Bearbeitung kann ebenfalls dargestellt sein. Zudem kann jedem Arbeitsschritt ein Bearbeiter, der den Arbeitsschritt durchführt, veranlasst oder überwacht sowie eine Genehmigungsinstanz zum Beispiel ein Vorgesetzter oder Bauleiter, der den durchgeführten Arbeitsschritt bestätigt oder genehmigt, zugeordnet sein.

Wählt der Benutzer aus dem individuellen Revisionsplan einen Arbeitsschritt aus, öffnet sich zum Beispiel eine Maske mit Details zu dem Arbeitsschritt. Dort sind nochmals die Berechtigungen aufgeführt sowie die dem Schritt zugeordneten Protokolle.

Nachdem der Mitarbeiter seine Revisionsschicht beendet hat, legt er das Tablet 19 wieder in eine Schublade 3 zurück, wobei das Öffnen einer Schublade wieder auf der Basis der auf der Identifikationskarte 17 hinterlegten Nutzerkennung erfolgt. Sobald die Schublade vom Rechner 5 geöffnet worden ist und das Tablet 19 beim Einlegen in die Schublade mit den Schnittstellen der Schublade verbunden worden ist, erfolgt eine Übertragung der während der Revisionsschicht in die Terminal-Revisionssoftware eingetragenen Daten auf die Rechner-Revisionssoftware. Dabei werden vorzugsweise auch das Datum und die Nutzerkennung desjenigen Mitarbeiters, der das Tablet 19 benutzt hat, gespeichert, so dass am Ende der Revision eine vollständige Protokolldatei des Revisionsvorganges auf dem Rechner 5 gespeichert ist. Diese Protokolldatei kann dann beispielsweise auf einem weiteren USB-Stick gesichert werden.

Um einen unautorisierten Zugriff auf die Daten des Rechners zu erschweren, kann der Rechner mit einer passwortgeschützten Festplatte ausgestattet sein, so dass ein Zugriff auf die Festplatte nur bei Kenntnis der Passwortes möglich ist.

Im Revisionssystem können neben den beschriebenen Maßnahmen weitere vorteilhafte Maßnahmen verwirklicht sein. In einer dieser Maßnahmen werden die vorhandenen Datenträgerleseeinrichtungen, im vorliegenden Ausführungsbeispiel also der USB-Anschluss, nach der Installation der Software auf dem Rechner softwareseitig verriegelt. Weiterhin kann mit dem Revisionssystem wenigstens ein Datenträger, im vorliegenden Ausführungsbeispiel wenigstens ein USB-Stick, mitgeliefert werden, der zum Austausch der Daten genutzt werden kann. Die mitgelieferten Datenträger wie etwa ein USB-Stick zum Datenaustausch sowie der USB-Stick, der die Software enthält, können dabei eine im Rechner hinterlegte Signatur aufweisen, so dass nur diese Datenträger von der Datenträgerleseeinrichtung erkannt werden und somit nur diese Datenträger mit dem Revisionssystem genutzt werden können. Somit erhält man zusätzliche Sicherheit vor Zugriffen mit nicht zugelassenen Datenträgern, da die vorhandenen Datenträgerleseeinrichtungen, im vorliegenden Ausführungsbeispiel also der USB-Port, zum einen erst nach der Anmeldung für den Datenaustausch freigeben werden und zum anderen nur die mit der Signatur versehenden Datenträger, die im vorliegenden Ausführungsbeispiel USB-Sticks sind, zulässig sind.

Obwohl die vorliegende Erfindung zu Illustrationszwecken anhand eines konkreten Ausführungsbeispiels beschrieben worden ist, soll das konkrete Ausführungsbeispiel die Erfindung nicht beschränken, da von dem konkreten Ausführungsbeispiel im Rahmen der Erfindung abgewichen werden kann. So können andere Identifikationselemente als Identifikationskarten Verwendung finden. Auch braucht der Datenträger nicht in Form eines USB-Sticks realisiert zu sein. Stattdessen kann er beispielsweise auch in Form einer DVD realisiert sein. Auch ist es nicht unbedingt notwendig, eine Ladeschnittstelle in einer Schublade des Schrankes zu haben. Insbesondere, wenn die Tablets austauschbare Akkus aufweisen, kann ein externes Laden der Akkus erfolgen. Weiterhin ist es auch nicht nötig, dass auf dem Rechner bereits ein Betriebssystem installiert ist. Es reicht im Rahmen der Erfindung aus, wenn auf dem Rechner 5 lediglich ein Bios installiert ist, so dass ein etwaiges auf dem Datenträger mitgeliefertes Betriebssystem vor der Installation der individualisierten Revisionssoftware installiert werden kann. Da also die vorliegende Erfindung auch anders als im konkreten Ausführungsbeispiel ausgestaltet sein kann, soll die Erfindung lediglich durch die angehängten Ansprüche begrenzt sein.

## Patentansprüche

1. Revisionssystem zur Revision einer technischen Anlage, mit
- einem Schrank (1), welcher mindestens eine Schublade (3) mit einer in der Schublade (3) angeordneten Datenschnittstelle (21) aufweist,
- mindestens einem in die Schublade (3) passenden Handheld-Terminal (19) mit einer zur Datenschnittstelle (21) in der Schublade (3) kompatiblen Datenschnittstelle (27),
- einem mit der Datenschnittstelle (21) jeder Schublade verbundenen Rechner (5),
- einer mit dem Rechner (5) verbundenen Datenträgerleseeinrichtung (11), und
- wenigstens einem mit der Datenträgerleseeinrichtung (11) kompatiblen Datenträger (15), welcher eine für die Revision individualisierte Software und einen Installer zum Installieren der individualisierten Software auf dem Rechner (5) und jedem in einer Schublade (3) befindlichen und über seine Datenschnittstelle (27) mit der Datenschnittstelle (21) in der Schublade (3) verbundenen Handheld-Terminal (19) enthält, wobei die individualisierte Software eine individualisierte Rechner-Revisionssoftware zur Installation auf dem Rechner (5) und eine individualisierte Terminal-Revisionssoftware zur Installation auf jedem in einer Schublade (3) befindlichen und über seine Datenschnittstelle (27) mit der Datenschnittstelle (21) in der Schublade (3) verbundenen Handheld-Terminal (19) umfasst.

2. Revisionssystem nach Anspruch 1, in dem die individualisierte Software zur Installation auf dem Rechner (5) und jedem in einer Schublade (3) befindlichen und über seine Datenschnittstelle (27) mit der Datenschnittstelle (21) in der Schublade (3) verbundenen Handheld-Terminal (19) eine Aktualisierungssoftware zum Aktualisieren der auf dem Rechner (5) installierten Rechner-Revisionssoftware auf der Basis der auf einem Handheld-Terminal (19) installierten Terminal-Revisionssoftware, wenn die Datenschnittstelle (27) des Handheld-Terminals (19) mit der Datenschnittstelle (21) in einer Schublade (3) verbunden wird, umfasst.

3. Revisionssystem nach Anspruch 2, in dem die Rechner-Revisionssoftware und die Terminal-Revisionssoftware eine Rechner-Datenbank bzw. eine Terminal-Datenbank umfassen und die Aktualisierungssoftware eine Datenbank-Aktualisierungssoftware zum Aktualisieren der auf dem Rechner (5) installierten Rechner-Datenbank auf der Basis der auf einem Handheld-Terminal (19) installierten Terminal-Datenbank, wenn die Datenschnittstelle (27) eines Handheld-Terminals (19) mit der Datenschnittstelle (21) in einer Schublade (3) Verbunden wird, umfasst.

4. Revisionssystem nach einem der Ansprüche 1 bis 3, in dem jeder Schublade (3) ein softwaregesteuerter Öffnungsmechanismus (25) zugeordnet ist und die individualisierte Software zur Installation auf dem Rechner (5) eine Steuersoftware zum Ansteuern des softwaregesteuerten Öffnungsmechanismus (25) umfasst.

5. Revisionssystem nach einem der Ansprüche 1 bis 4, in dem die individualisierte Software mit einem Modul zur Zugriffbeschränkung versehen ist.

6. Revisionssystem nach Anspruch 5, welches außerdem für jeden Nutzer eine Identifikationskennelement (17) sowie einen mit dem Rechner (5) verbundenes Lesegerät (13) zum Auslesen von Identifikationskennelementen (17) umfasst.

7. Revisionssystem nach Anspruch 6, in dem die individualisierte Software wenigstens zwei Hierarchieebenen umfasst und jedes Identifikationskennelement (17) einer Hierarchieebene in der individualisierten Software zugeordnet ist.

8. Revisionssystem nach einem der Ansprüche 1 bis 7, in dem jede Schublade (3) eine Ladeschnittstelle (23) und jedes Handheld-Terminal (19) eine zur Ladeschnittstelle (23) der Schubladen (3) kompatible Ladeschnittstelle (29) aufweist.

9. Revisionssystem nach Anspruch 8, in dem wenigsten zwei Schubladen (3) und zwei Handheld-Terminals (19) vorhanden sind und die Steuersoftware zum Ansteuern des Öffnungsmechanismus (25) dazu ausgelegt ist, den Ladezustand der an die Ladeschnittstellen (23) in den Schubladen (3) angeschlossenen Handheld-Terminals (19) zu überprüfen und, wenn ein Öffnen einer Schublade (3) veranlasst ist, diejenige Schublade (3) zu öffnen, in der sich dasjenige Handheld-Terminal (19) mit dem größeren Ladung befindet.

10. Revisionssystem nach einem der vorangehenden Ansprüche, in dem der Rechner (5) eine Festplatte mit passwortgeschütztem Zugriff aufweist.

11. Revisionssystem nach einem der vorangehenden Ansprüche, in dem die individualisierte Software eine Verriegelungssoftware umfasst, mit der die vorhandenen Datenträgerleseeinrichtungen (11) verriegelt werden können.

12. Revisionssystem nach Anspruch 11, in dem jeder Datenträger (15) eine im Rechner (5) hinterlegte Signatur aufweist und die vorhandenen Datenträgerleseeinrichtungen (11) so konfiguriert sind, dass sie nur Datenträger (15) mit einer hinterlegten Signatur erkennen.

13. Revisionssystem nach einem der vorangehenden Ansprüche, in dem die individualisierte Software auf dem Rechner (5) und/oder wenigstens einem Handheld-Terminal (19) installiert ist.

## Claims

1. Inspection system for inspecting a technical installation, having
- a cabinet (1) that has at least one drawer (3) having a data interface (21) arranged in the drawer (3),
- at least one handheld terminal (19) that fits into the drawer (3), having a data interface (27) that is compatible with the data interface (21) in the drawer (3),
- a computer (5) that is connected to the data interface (21) of each drawer,
- a data storage medium reading device (11) that is connected to the computer (5), and
- at least one data storage medium (15) that is compatible with the data storage medium reading device (11) and that contains a piece of software individualized for the inspection and an installer for installing the individualized software on the computer (5) and each handheld terminal (19) that is situated in a drawer (3) and that is connected via its data interface (27) to the data interface (21) in the drawer (3), wherein the individualized software comprises a piece of individualized computer inspection software for installation on the computer (5) and a piece of individualized terminal inspection software for installation on each handheld terminal (19) that is situated in a drawer (3) and that is connected via its data interface (27) to the data interface (21) in the drawer (3).

2. Inspection system according to Claim 1, in which the individualized software for installation on the computer (5) and each handheld terminal (19) that is situated in a drawer (3) and that is connected via its data interface (27) to the data interface (21) in the drawer (3) comprises a piece of update software for updating the computer inspection software installed on the computer (5) on the basis of the terminal inspection software installed on a handheld terminal (19) when the data interface (27) of the handheld terminal (19) is connected to the data interface (21) in a drawer (3).

3. Inspection system according to Claim 2, in which the computer inspection software and the terminal inspection software comprise a computer database and a terminal database, respectively, and the update software comprises a piece of database update software for updating the computer database installed on the computer (5) on the basis of the terminal database installed on a handheld terminal (19) when the data interface (27) of a handheld terminal (19) is connected to the data interface (21) in a drawer (3).

4. Inspection system according to one of Claims 1 to 3, in which each drawer (3) has an associated software-controlled opening mechanism (25), and the individualized software for installation on the computer (5) comprises a piece of control software for actuating the software-controlled opening mechanism (25).

5. Inspection system according to one of Claims 1 to 4, in which the individualized software is provided with a module for access restriction.

6. Inspection system according to Claim 5, which furthermore comprises, for each user, an identification element (17) and also a reader (13), connected to the computer (5), for reading identification elements (17).

7. Inspection system according to Claim 6, in which the individualized software comprises at least two hierarchy levels, and each identification element (17) is associated with a hierarchy level in the individualized software.

8. Inspection system according to one of Claims 1 to 7, in which each drawer (3) has a charging interface (23), and each handheld terminal (19) has a charging interface (29) that is compatible with the charging interface (23) of the drawers (3).

9. Inspection system according to Claim 8, in which at least two drawers (3) and two handheld terminals (19) are existent and the control software for activating the opening mechanism (25) is designed to check the charge state of the handheld terminals (19) connected to the charging interfaces (23) in the drawers (3) and, if opening of a drawer (3) is prompted, to open that drawer (3) that contains that handheld terminal (19) having the greater charge.

10. Inspection system according to one of the preceding claims, in which the computer (5) has a hard disk with password-protected access.

11. Inspection system according to one of the preceding claims, in which the individualized software comprises a piece of locking software that can be used to lock the existent data storage medium reading devices (11).

12. Inspection system according to Claim 11, in which each data storage medium (15) has a signature stored in the computer (5), and the existent data storage medium reading devices (11) are configured such that they recognize only data storage media (15) with a stored signature.

13. Inspection system according to one of the preceding claims, in which the individualized software is installed on the computer (5) and/or at least one handheld terminal (19).

## Revendications

1. Système de révision d'une installation technique, comprenant
- une armoire ( 1 ) qui a au moins un tiroir ( 3 ) ayant une interface ( 21 ) de données mise dans le tiroir ( 3 ),
- au moins un terminal ( 19 ) portatif s'adaptant dans le tiroir ( 3 ) et ayant une interface ( 27 ) de données compatible avec l'interface ( 21 ) de données dans le tiroir ( 3 ),
- un ordinateur ( 5 ) relié à l'interface ( 21 ) de données de chaque tiroir,
- un dispositif ( 11 ) de lecture d'un support de données, le dispositif ( 11 ) étant relié à l'ordinateur ( 5 ) et
- au moins un support ( 15 ) de données qui est compatible avec le dispositif ( 11 ) de lecture d'un support de données et qui comporte un logiciel individualisé pour la révision et un installeur pour installer le logiciel individualisé sur l'ordinateur ( 5 ) et sur chaque terminal ( 19 ) portatif se trouvant dans un tiroir ( 3 ) et relié par son interface ( 27 ) de données à l'interface ( 21 ) de données dans le tiroir ( 3 ), le logiciel individualisé comprenant un logiciel de révision-ordinateur individualisé pour l'installation sur l'ordinateur ( 5 ) et un logiciel de révision-terminal individualisé pour l'installation sur chaque terminal ( 19 ) portatif se trouvant dans un tiroir ( 3 ) et relié, par son interface ( 27 ) de données, à l'interface ( 21 ) de données dans le tiroir ( 3 ).

2. Système de révision suivant la revendication 1, dans lequel le logiciel individualisé, pour l'installation de l'ordinateur ( 5 ) et sur chaque terminal ( 19 ) portatif se trouvant dans un tiroir ( 3 ) et relié par son interface ( 27 ) de données à l'interface ( 21 ) de données dans le tiroir ( 3 ), comprend un logiciel de mise à jour pour la mise à jour du logiciel de révision-ordinateur installé sur l'ordinateur ( 5 ) sur la base du logiciel de révision-terminal installé sur le terminal ( 19 ) portatif, si l'interface ( 27 ) de données du terminal ( 19 ) portatif est relié à l'interface ( 21 ) de données dans un tiroir ( 3 ).

3. Système de révision suivant la revendication 2, dans lequel le logiciel de révision-ordinateur et le logiciel de révision-terminal comprennent une base de données ordinateur et une base de données terminal et le logiciel de mise à jour comprend un logiciel de mise à jour de base de données pour la mise à jour de la base de données ordinateur installée sur l'ordinateur ( 5 ) sur la base de la base de données terminal installée sur un terminal ( 19 ) portatif, si la base ( 27 ) de données d'un terminal ( 19 ) portatif est reliée à la base ( 21 ) de données dans un tiroir ( 3 ).

4. Système de révision suivant l'une des revendications 1 à 3, dans lequel un mécanisme ( 25 ) d'ouverture commandé par logiciel est associé à chaque tiroir ( 3 ) et le logiciel individualisé, pour l'installation sur l'ordinateur ( 5 ), comprend un logiciel de commande du mécanisme ( 25 ) d'ouverture commandé par logiciel.

5. Système de révision suivant l'une des revendications 1 à 4, dans lequel le logiciel individualisé est pourvu d'un module de limitation d'accès.

6. Système de révision suivant la revendication 5, qui comprend en outre, pour chaque utilisateur, un élément ( 17 ) caractéristique d'identification ainsi que, relié à l'ordinateur ( 5 ), un appareil ( 13 ) de lecture d'éléments ( 17 ) caractéristiques d'identification.

7. Système de révision suivant la revendication 6, dans lequel le logiciel individualisé comprend au moins deux niveaux hiérarchiques et chaque élément ( 17 ) caractéristique d'identification est associé à un niveau hiérarchique dans le logiciel individualisé.

8. Système de révision suivant l'une des revendications 1 à 7, dans lequel il y a dans chaque tiroir ( 3 ) un interface ( 23 ) de charge et chaque terminal ( 19 ) portatif a un interface ( 29 ) de charge compatible avec l'interface ( 23 ) de charge du tiroir ( 3 ).

9. Système de révision suivant la revendication 8, dans lequel il y a au moins deux tiroirs ( 3 ) et deux terminaux ( 19 ) portatifs et le logiciel de commande du mécanisme ( 25 ) d'ouverture est conçu pour contrôler l'état de charge des terminaux ( 29 ) portatifs reliés aux interfaces ( 23 ) de charge dans les tiroirs ( 3 ) et pour, si une ouverture d'un tiroir ( 3 ) est provoquée, ouvrir le tiroir ( 3 ) dans lequel se trouve le terminal ( 19 ) portatif ayant la charge la plus grande.

10. Système de révision suivant l'une des revendications précédentes, dans lequel l'ordinateur ( 5 ) a un disque dur à accès protégé par mot de passe.

11. Système de révision suivant l'une des revendications précédentes, dans lequel le logiciel individualisé comprend un logiciel de verrouillage, par lequel les dispositifs ( 11 ) présents de lecture d'un support de données peuvent être verrouillés.

12. Système de révision suivant la revendication 11, dans lequel chaque support ( 15 ) de données a une signature mémorisée dans l'ordinateur ( 5 ) et des dispositifs ( 11 ) présents de lecture d'un support de données sont configurés de manière à ne reconnaître que des supports ( 15 ) de données ayant une signature mémorisée.

13. Système de révision suivant l'une des revendications précédentes, dans lequel le logiciel individualisé est installé sur l'ordinateur ( 5 ) et/ou sur au moins un terminal portatif.
